**Europäisches Patentamt**

**European Patent Office**

**Office européen des brevets**

(19)

(11) Veröffentlichungsnummer: **0 089 385**

**A1**

(12) # EUROPÄISCHE PATENTANMELDUNG

(21) Anmeldenummer: **82102247.2**

(22) Anmeldetag: **19.03.82**

(51) Int. Cl.³: **E 01 C 19/23**
**B 60 K 17/00, B 62 D 1/02**
**G 05 G 1/04, G 05 G 5/06**
**G 05 G 7/04**

(43) Veröffentlichungstag der Anmeldung:
**28.09.83** Patentblatt **83/39**

(84) Benannte Vertragsstaaten:
**AT BE CH DE FR GB IT LI LU NL SE**

(71) Anmelder: **LOSENHAUSEN Maschinenbau AG**
**Schlüterstrasse 13-19 Postfach 230149**
**D-4000 Düsseldorf(DE)**

(72) Erfinder: **Baier, Heinrich**
**Heinrich-Neusen-Strasse 13**
**D-4156 Willich 2(DE)**

(72) Erfinder: **Waschulewski, Hans-Georg**
**Danziger Strasse 17**
**D-4020 Mettmann(DE)**

(72) Erfinder: **Kürten, Hans-Werner**
**Berliner Strasse 73**
**D-4030 Ratingen(DE)**

(54) **Fahrerplatz für Tandemwalze.**

(57) Der Fahrerplatz einer Tandemwalze enthält zwei jeweils um ihre eigene Achse drehbare Fahrersitze (3), angeordnet auf der quer zur Walze verlaufenden Mittellinie des Fahrerplatzes und in der Ebene des jeweiligen Bandagenrandes, zwei um eine horizontale der Mittelebene längs zur Walze des Fahrerplatzes schwenkbare Lenkeinrichtungen (5), angeordnet an zwei gegenüberliegenden, quer zur Walze verlaufenden Seiten (1,1¹) des Fahrerplatzes, und einen mittig zwischen den Fahrersitzen (3) angeordneten, in Längsrichtung der Walze schwenkbaren Fahrhebel (6), der überdies auch quer zur Walze verschwenkbar ist. Jede Lenkeinrichtung (5) enthält ein Lenkrad (10) eine Lenksäule (11) und, anderen unterem Ende, eine Schwenkhülse, die um eine Lenkwelle gegen eine Selbsthemmung verschwenkbar ist. Das freie Endteil des um eine Achse quer zur Walze selbsthemmend schwenkbaren Fahrhebels (6) ist bezüglich des drehbar gelagerten Teiles um ein längs zur Walze gerichtete Achse selbsthemmend verschwenkbar. Eine Übersetzungseinrichtung zwischen dem Fahrhebel (6) und einem Leistungsverstellglied des hydrostatischen Fahrantriebs der Tandemwalze enthält einen Gleitkörper, der über einen ersten Bowdenzug mit einem Handrad an dem Fahrhebel (6) und über einen zweiten Bowdenzug mit dem Leistungsverstellglied verbunden ist.

./...

Fig 1

Fahrerplatz für Tandemwalze

Die Erfindung betrifft einen Fahrerplatz für eine Tandemwalze mit zwei Fahrersitzen, mit zwei Lenkeinrichtungen und mindestens einem Fahrhebel.

Ein bekannter Fahrerplatz für eine Tandemwalze hat eine Kabine mit einer rechteckförmigen Grundfläche und weist zwei diagonal gegenüberliegend in Ecken fest angeordnete Fahrersitze auf, denen jeweils eine Lenkeinrichtung und ein Fahrhebel zugeordnet ist; der Fahrhebel befindet sich dabei auf der Außenseite der Lenkeinrichtungen (Modell DV10B, Hamm). Diese Tandemwalze kann bei Rand- und Nahtarbeiten in zwei Arbeitsrichtungen betrieben werden, gestattet mit der vorhandenen Ausrüstung jedoch eine Rückwärtsfahrt in der gleichen Spur nur in einer nicht sitzgerechten Körperhaltung des Maschinenführers.

Neben dem vorerwähnten sind noch andere Fahrerplätze für Tandemwalzen bekannt (z.B. bei den Modellen W 551, W 751 der Anmelderin), bei denen der Maschinenführer nur in einer Arbeitsrichtung bei Rand- und Nahtarbeiten eine normale Sitzposition einnehmen kann.

Für den Betrieb solcher Tandemwalzen, insbesondere bei Rand- und Nahtverdichtungen, ist es erforderlich, daß der Maschinenführer die Bandagenränder an der Aufstandslinie einsehen kann. Bei Tandemwalzen mit einem Betriebsgewicht von 6 t und mehr müssen die Fahrersitze dadurch einen so großen seitlichen Abstand haben, daß die gemeinsamen Stellelemente an der Querseite des Fahrerplatzes nicht mehr im näheren Greifraum beider Sitzpositionen liegen. Für beide Fahrtrichtungen gleichwertige Sitzpositionen sind dann nur durch Verdoppelung der Ausrüstung zu erzielen. Die Anordnung der und der Wechsel zwischen den vier Sitzpositionen haben aber einen Raumbedarf, der für den Fahrerplatz im allgemeinen nicht zur Verfügung steht, jedenfalls nicht bei Tandemwalzen mit Betriebsgewichten bis zu 12 t. Die bekannten Tandemwalzen sind daher mit Fahrerplätzen versehen, die zwar den gewünschten geringeren Raumbedarf haben, aber nicht oder nur unter erheblichen Schwierigkeiten für den Maschinenführer alle vorhandenen technischen Arbeitsmöglichkeiten der Tandemwalze auszunutzen gestatten.

Dementsprechend besteht die Aufgabe der Erfindung darin, einen Fahrerplatz für eine Tandemwalze der eingangs genannten Art zu schaffen, der mit einem Minimum an Ausrüstung versehen ist und bei dem alle für den Betrieb
der Tandemwalze erforderlichen Arbeitsstellungen für den
Maschinenführer ergonomisch gleich günstig sind.

Erfindungsgemäß wird diese Aufgabe dadurch gelöst, daß
die Fahrersitze um ihre vertikale Achse drehbar im wesentlichen auf der Quermittellinie des Fahrerplatzes
und in der Ebene des jeweiligen Bandagenrandes nebeneinander angeordnet sind, daß die Lenkeinrichtungen im
wesentlichen auf der Längsmittellinie des Fahrerplatzes
und um diese schwenkbar an gegenüberliegenden Querseiten
des Fahrerplatzes angeordnet sind und daß ein mittig
zwischen den Fahrersitzen angeordneter Fahrhebel vorgesehen ist.

Nach der Erfindung liegen somit bei dem Fahrerplatz für
eine Tandemwalze die Lenkeinrichtung und der Fahrhebel
unabhängig von der Arbeitsrichtung der Tandemwalze stets
im näheren Greifraum des Maschinenführers, so daß dieser
in jedem Augenblick eine gute Sicht in den Arbeitsbereich der Tandemwalze hat und diese auf beiden Seiten
des Fahrerplatzes für jeweils beide Fahrtrichtungen
gewährleistet ist.

Vorteilhafte Ausgestaltungen und Weiterbildungen der
Erfindung sind in Unteransprüchen gekennzeichnet.

Bei dem Fahrerplatz für eine Tandemwalze nach der Erfindung mit einer Lenkeinrichtung aus einem Lenkrad und
einer Lenksäule, durch die hindurch das Lenkrad mit
einer Lenkwelle und einer hydraulischen Lenkhilfe in
Antriebsverbindung steht, kann die Lenksäule an dem dem
Lenkrad abgewandten Ende mit einer um die Lenkwelle
schwenkbaren Schwenkhülse versehen und die Schwenkhülse
gegen eine Selbsthemmung verschwenkbar und in der Mittellage und mindestens zwei Seitenlagen arretierbar sein.

Der erfindungsgemäße Fahrerplatz für eine Tandemwalze mit einem um eine zu einer Querachse der Tandemwalze schwenkbaren Fahrhebel, dessen inneres Ende mit einem Leistungsverstellglied für eine Förderpumpe eines hydrostatischen Fahrantriebs verbunden ist, kann einen Fahrhebel aufweisen, der an einer um zwei zueinander senkrechte Richtungen schwenkbaren Schwenkvorrichtung angeordnet ist. Insbesondere kann der Fahrhebel über eine einstellbare, die Fahrgeschwindigkeit begrenzende Übersetzungseinrichtung mit dem Leistungsverstellglied verbunden sein. Dadurch läßt sich der Geschwindigkeitsbereich des Vortriebs der Tandemwalze je nach den Anforderungen einstellen, ohne daß der Schwenkbereich des Fahrhebels verändert wird, so daß besonders im unteren Geschwindigkeitsbereich eine feinfühlige und ruckfreie Steuerung der Fahrgeschwindigkeit, der Beschleunigung und der Verzögerung ermöglicht wird. Das Stellglied dafür liegt ebenfalls in jedem Augenblick im näheren Greifraum des Maschinenführers.

Ein Ausführungsbeispiel der Erfindung ist in den Abbildungen dargestellt und wird nachfolgend anhand der Bezugszeichen im einzelnen erläutert und beschrieben. Es zeigen

Figur 1   eine schematische Draufsicht auf den Fahrerplatz für die Tandemwalze nach der Erfindung;

Figur 2   einen Längsschnitt durch die Lenkeinrichtung bei der Tandemwalze nach Figur 1;

Figur 3   einen Schnitt durch die Lenkeinrichtung
          entlang der Linie A-B in Figur 2;

Figur 4   eine teilweise geschnittene Teilansicht
          des Fahrhebels bei der Tandemwalze nach
          Figur 1;

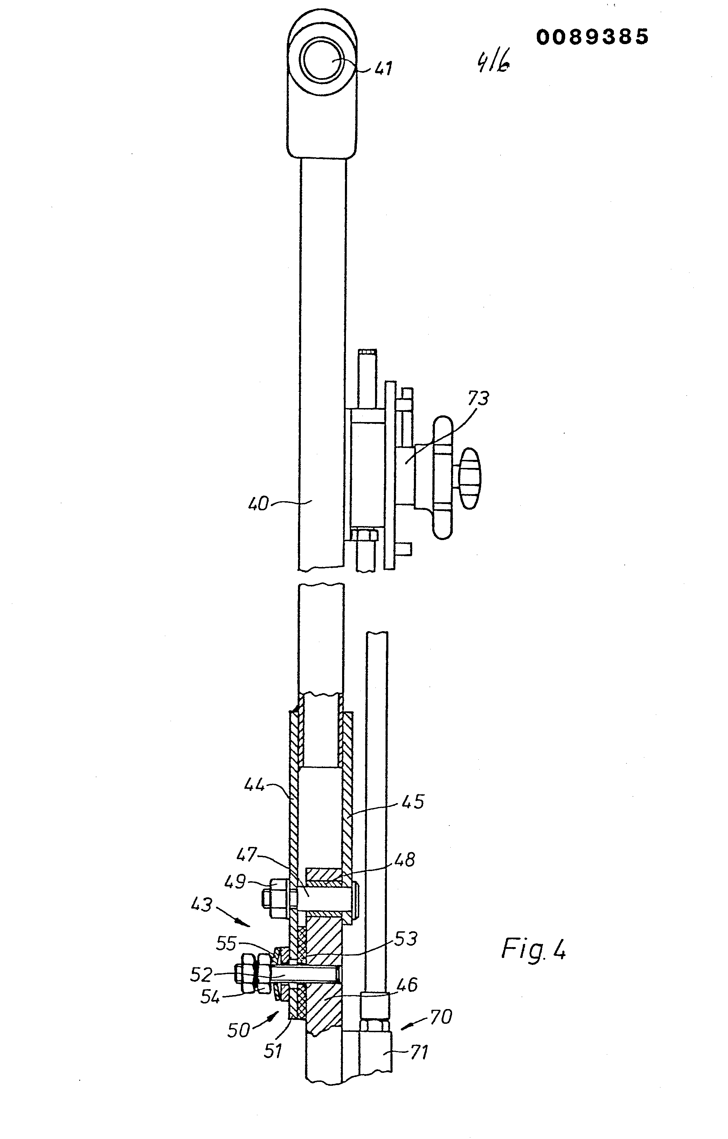

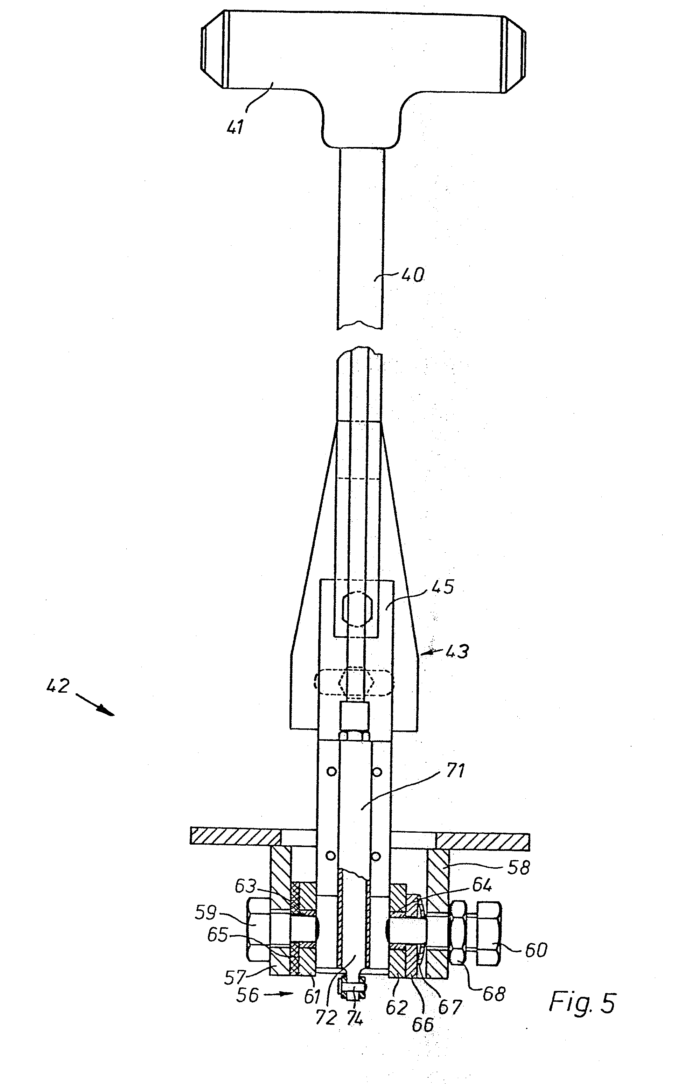

Figur 5   eine teilweise geschnittene Ansicht des
          Schwenklagers bei dem Fahrhebel nach
          Figur 4;   und

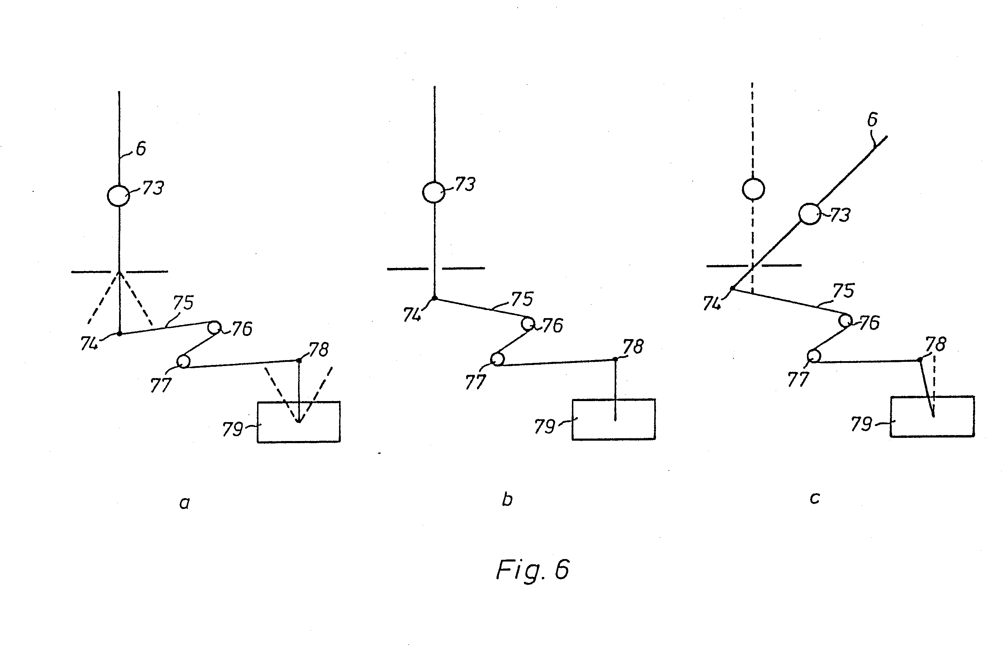

Figur 6   eine schematische Darstellung der Funk-
          tionsweise der Übersetzungseinrichtung bei
          dem Fahrhebel nach Figur 4.

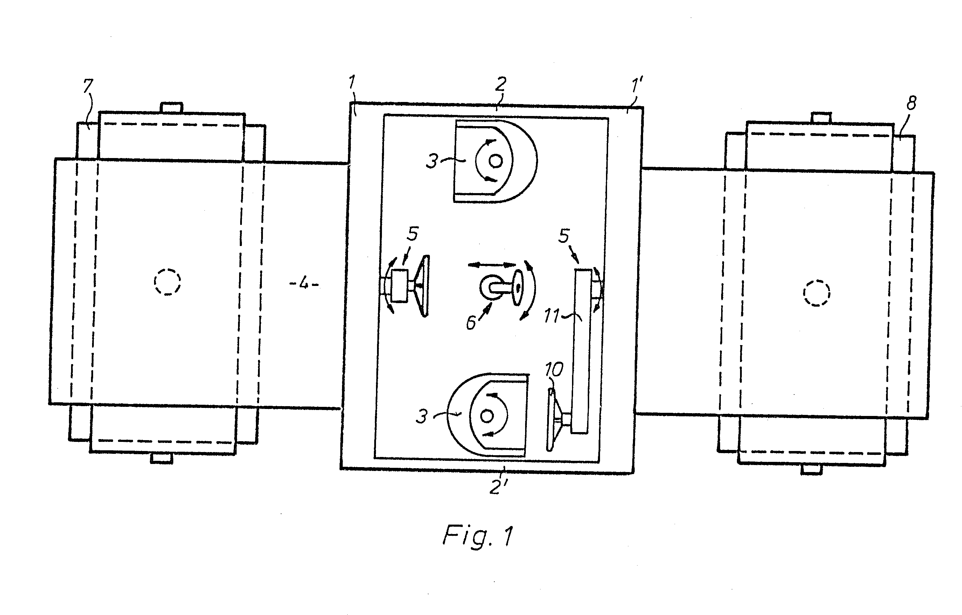

In der schematischen Draufsicht der Figur 1 erkennt man
einen Fahrerplatz, der gegebenenfalls auch mit einer
geschlossenen Kabine versehen sein kann, mit Querseiten 1, 1' und Längsseiten 2, 2' für eine Tandemwalze mit einem Rahmen 4 und zwei Bandagen 7, 8. Der
Fahrerplatz weist zwei Fahrersitze 3, 3' auf, die
nebeneinander auf der Quermittellinie des Fahrerplatzes
angeordnet und um ihre Achse drehbar sind. Die Anordnung ist dabei so getroffen, daß die Ebenen der
seitlichen Ränder der Bandagen 7, 8 die Fahrersitze 3
bzw. 3' schneiden, so daß der Maschinenführer in jeder
Fahrtrichtung aus normaler Sitzposition den Bandagenrand an der Aufstandslinie einsehen kann. Zwei Lenkeinrichtungen 5 befinden sich an gegenüberliegenden
Querseiten des Fahrerplatzes; sie sind auf der Längsmittellinie des Fahrerplatzes angeordnet und um diese
schwenkbar, so daß die jeweils gewünschte Lenkeinrichtung 5 zu dem jeweiligen Fahrersitz 3 oder 3'
eingestellt werden kann. Der Fahrhebel 6 ist mittig
zwischen den Fahrersitzen 3, 3' angeordnet.

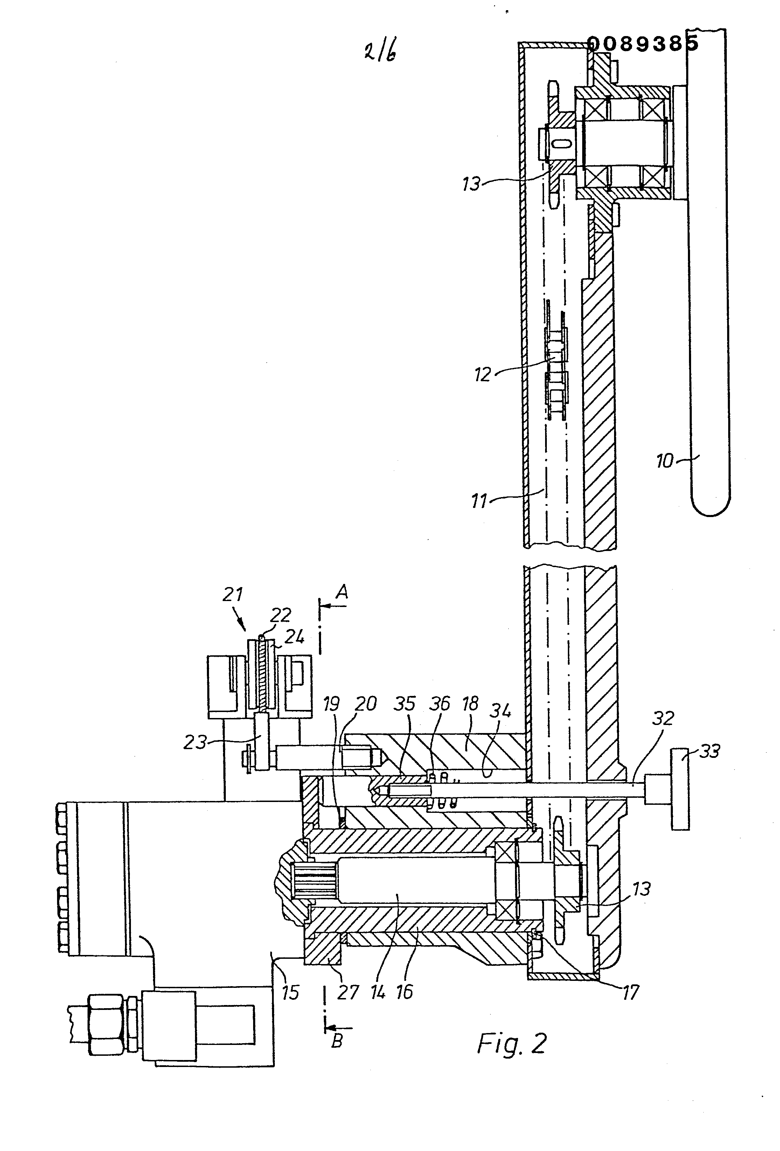

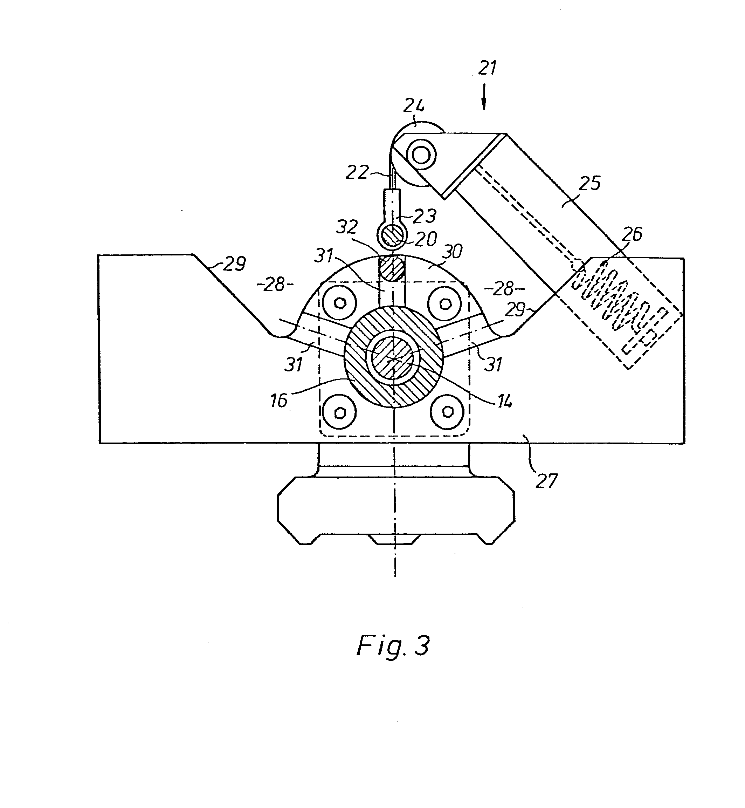

Die Lenkeinrichtung 5 ist im einzelnen in Figuren 2 und 3 dargestellt. Sie besteht aus einem Lenkrad 10, das an einem Ende einer Lenksäule 11 an der dem Maschinenführer zugekehrten Seite drehbar gelagert ist und über eine Kette 12, die innerhalb der Lenksäule 11 verläuft, und Kettenräder 13 mit einer Lenkwelle 14 in Antriebsverbindung steht. Die Lenkwelle 14 ist mit einer üblichen und daher nicht im einzelnen beschriebenen hydraulischen Lenkhilfe 15 verbunden und in einer Buchse 16 gelagert, deren eines Ende über eine weiter unten beschriebene Halteplatte 27 an der Querseite 1 des Fahrerplatzes befestigt ist und deren anderes Ende in einen entsprechenden Durchbruch an dem dem Lenkrad 10 abgewandten Ende der Lenksäule 11 eingesetzt und durch einen Sicherungsring 17 gegen axiale Verschiebung gesichert ist. Die Buchse 16 und die Lenkwelle 14 sind exzentrisch in einer Schwenkhülse 18 angeordnet, die an einer Stirnseite mit dem dem Lenkrad 10 abgewandten Ende der Lenksäule 14 verschraubt ist und an der anderen Stirnseite durch einen weiteren Sicherungsring 19 gegen axiale Verschiebung gesichert ist. Die Schwenkhülse 18 erstreckt sich nur über einen Teil der Länge der Buchse 16. In die der Lenksäule 11 abgewandte Stirnseite der Schwenkhülse 18 ist ein Bolzen 20 eingesetzt, an dessen freiem Ende eine Selbsthemmung 21 angreift. Die Selbsthemmung 21 besteht aus einem Seilzug 22, dessen eines Ende mit einem Auge 23 an dem freien Ende des Bolzens 20 befestigt ist und dessen anderes Ende über eine Umlenkrolle 24 in ein Federgehäuse 25 verläuft und darin mit einer Spannfeder 26 verbunden ist.

In Figur 3 ist die vorerwähnte, allgemein rechteckförmige Halteplatte 27 gezeigt, die an der der Lenksäule 11 abgewandten Stirnseite der Buchse 16 und an der   Querseite 1 des Fahrerplatzes befestigt ist.
Durch einen Durchbruch in der Mitte der Halteplatte 27
erstrecken sich die Lenkwelle 14 und das Ende der
Buchse 16. An der der Schwenkhülse 18 zugekehrten Seite
ist die Halteplatte 27 mit einer Aussparung 28 mit
Seitenkanten 29 versehen, in die ein im Schnitt annähernd halbkreisförmiger, ringförmig das Ende der
Buchse 16 umgebender Vorsprung 30 vorsteht. Der Vorsprung 30 ist zu der Schwenkhülse 18 ausgerichtet und
von dieser lediglich durch den Sicherungsring 19 getrennt. In der Halteplatte 27 sind an der der Schwenkhülse 18 zugekehrten Seite drei radial verlaufende
Nuten 31 vorgesehen, von denen eine mittlere nach oben
und zwei unter einem Winkel im Bereich von 60° bis 70°
nach gegenüberliegenden Seiten gerichtet sind. Ein
Arretierbolzen 32 mit einem Bedienungsknopf 33 an seinem
freien Ende erstreckt sich durch Durchbrüche in der Lenksäule 11 und in eine weite Bohrungsstufe einer Stufenbohrung 34, die sich parallel zu der Lenkwelle 14 durch
die Schwenkhülse 18 erstreckt. Eine engere Bohrungsstufe der Stufenbohrung 34 nimmt einen verstärkten
Teil 35 des Arretierbolzens 32 auf; das verstärkte
Teil 35 verläuft durch die Stufenbohrung 34 der Schwenkhülse 18 hindurch und ist in seinem Durchmesser an das
Maß der Nuten 31 in der Halteplatte 27 angepaßt. An dem
verstärkten Teil 35 greift eine in der weiteren Bohrungsstufe der Stufenbohrung 34 aufgenommene Arretierfeder 36
an.

Die vorstehend beschriebene Lenkeinrichtung 5 ist in
Figur 2 in senkrechter Stellung der Lenksäule 11 gezeigt, in der der Arretierbolzen 32 in die mittlere
Nut 31 der Halteplatte 27 eingreift. Zum Verschwenken
der Lenksäule 11 wird der Arretierbolzen 32 an dem
Bedienungsknopf 33 gegen die Kraft der Arretierfeder 36 aus der Nut 31 herausgezogen; die Lenksäule 11 läßt sich dann im oder gegen den Uhrzeigersinn verschwenken. Dabei wird die Schwenkhülse 18 mitgenommen und auf der Buchse 16 um die Lenkwelle 14 verschwenkt. Der federbelastete Seilzug 22 wirkt dabei selbsthemmend auf die Verschwenkung, und eine zu weitgehende Verschwenkung wird durch den Anschlag des Bolzens 20 an den Seitenkanten 29 der Halteplatte 27 verhindert. Wenn der Bedienungsknopf 33 nach entsprechender Verschwenkung losgelassen wird, kommt der Arretierbolzen 32 unter der Kraft der Arretierfeder 36 mit der jeweils gewählten Nut 31 in der Halteplatte 27 in Eingriff. Die Lenksäule 11 wird dadurch in der Seitenlage festgehalten, in der sie für die Kontrolle der Walzenfahrt bei Randarbeiten benötigt wird.

Der in Figuren 4 und 5 im einzelnen dargestellte Fahrhebel 6 besteht zunächst aus einem Oberteil 40, das ein übliches Bedienungselement 41 für eine Vibrationseinrichtung der Tandemwalze trägt, und aus einer Schwenkvorrichtung 42, die eine Verschwenkung des Fahrhebels 6 um zwei zueinander senkrechte Richtungen gestattet. Die Schwenkvorrichtung 42 besteht aus einem ersten Schwenkarm 43 zur Verschwenkung des Fahrhebels 6 um eine zur Längsachse der Tandemwalze parallele Achse und aus einem zweiten Schwenkarm 46 zur Verschwenkung des Fahrhebels 6 um eine zu einer Querachse der Tandemwalze parallele Achse. Der erste Schwenkarm 43 bildet zwei Platten 44, 45, mit denen das Oberteil 40 an dem dem Bedienungselement 41 abgewandten Ende z.B. durch Verschweißen fest verbunden ist. An dem dem Oberteil 40 abgewandten Ende sind die beiden Platten 44, 45 an einem ersten Ende des zweiten Schwenkarms 46 um die zur Längsachse parallele Achse schwenkbeweglich befestigt. Dazu dient ein Schwenkbolzen 47, der sich durch die Platten 44, 45 und ein in das erste Ende des zweiten Schwenkarms 46 eingesetztes Gleitlager 48 erstreckt und mit einer Mutter 49 gesichert ist. Eine Selbsthemmung 50 für die Verschwenkung des ersten Schwenkarms 43 in dem Gleitlager 48 ist an einem vorstehenden Teil 51 der Platte 44 ausgebildet und besteht im wesentlichen aus einem Bolzen 52, der durch einen Durchbruch in dem vorstehenden Teil 51 und eine verschleißarme Reibscheibe 53 hindurch in eine Gewindebohrung im ersten Ende des zweiten Schwenkarms 46 eingeschraubt ist. An dem vorstehenden Teil 51 greift eine durch Muttern 54 gespannte Tellerfeder 55 über eine Unterlegscheibe an und sichert so den ersten Schwenkarm 43 gegen unbeabsichtigte Verschwenkungen gegenüber dem zweiten Schwenkarm 46 bzw. den Fahrhebel 6 gegen unbeabsichtigte Verschwenkungen um die zu der Längsachse der Tandemwalze parallele Achse.

Der zweite Schwenkarm 46 bildet ein Vierkantprofil und erstreckt sich durch eine Öffnung im Boden des Fahrerplatzes; sein zweites Ende ist in einem Schwenklager 56 um eine zu einer Querachse der Tandemwalze parallele Achse schwenkbar gelagert. Das Schwenklager 56 besteht im wesentlichen aus zwei Befestigungsplatten 57, 58, die gegenüberliegend und nach unten gerichtet an dem Boden des Fahrerplatzes angeordnet sind und über Schwenkbolzen 59 bzw. 60 mit einer zugehörigen Lasche 61 bzw. 62 an gegenüberliegenden Seiten mit dem zweiten Schwenkarm 46 verbunden sind. Die Befestigungsplatten 57, 58 und die Laschen 61, 62 sind um 90° gegenüber den Platten 44, 45 versetzt, die den ersten Schwenkarm 43 bilden. Die Schwenkbolzen 59, 60 sind in Gewindebohrungen in den Befestigungsplatten 57, 58 eingeschraubt und haben gewindefreie Enden, die in Gleitlagern 63, 64 gelagert sind, die in die Laschen 61, 62 eingesetzt sind. Zwischen der Befestigungsplatte 57 und der Lasche 61 befindet sich eine verschleißarme Reibscheibe 65. Zwischen der Befestigungsplatte 58 und der Lasche 62 befindet sich eine Unterlegscheibe 66 und eine Tellerfeder 67, die mittels einer Mutter 68 an dem Schwenkbolzen 60 gespannt werden kann, so daß das Schwenklager 56 selbsthemmend ist.

Der Fahrhebel 6 läßt sich durch Verschwenkung des Oberteils 40 mit dem ersten Schwenkarm 43 in dem Gleitlager 48 gegen die Selbsthemmung 50 zur Sicherung gegen unbeabsichtigte Verstellungen nach der linken oder rechten Seite des Fahrerplatzes verschwenken. Zur Einstellung der Vortriebsgeschwindigkeit läßt sich der Fahrhebel durch Verschwenkung des zweiten Schwenkarms 46 in dem Schwenklager 56 ebenfalls gegen eine Selbsthemmung zur Sicherung gegen unbeabsichtigte Verstellungen um eine Achse verschwenken, die zur Schwenkachse des ersten Schwenkarms 43 senkrecht verläuft. Der Fahrhebel 6 wird so in der Vortriebseinstellung und in der Seitenlage festgehalten, in der er für die Kontrolle des Vortriebs bei Randarbeiten benötigt wird.

An der dem Maschinenführer zugewandten Seite des Fahrhebels 6 befindet sich eine Übersetzungseinrichtung 70 mit einer Hülse 71, die über einen Teil des Oberteils 40 und über die Schwenkvorrichtung 42 hinweg verläuft und einen Gleitkörper 72 enthält, dessen eines Ende mit einem ersten Bowdenzug verbunden ist, der mittels eines Handrades 73 am Oberteil 40 des Fahrhebels 6 in der Hülse 71 verschiebbar ist. Das andere Ende des Gleitkörpers 72 tritt aus der Hülse 71 unterhalb des Schwenklagers 56 aus und ist mit einer Halterung 74 für einen zweiten Bowdenzug 75 versehen, der über Umlenkeinrichtungen 76, 77 zu einem Leistungsverstellglied 78 einer Förderpumpe 79

des hydrostatischen Fahrantriebs der Tandemwalze verläuft (vgl. Figur 6). Der Gleitkörper 72 befindet sich
in der in Figur 5 dargestellten Lage in einer ersten
Extremstellung, in der er bis auf die Halterung 74 in
die Hülse 71 zurückgezogen ist. Bei Betätigung des
Handrades 73 wird der Gleitkörper 72 in der Hülse 71
zunehmend bis in eine andere Extremstellung verschoben,
in der die Halterung 74 am weitesten vom Ende der
Hülse 71 entfernt ist. Durch diese Verschiebung des
Gleitkörpers 72 wird der Verstellbereich des Leistungsverstellgliedes 78 verändert; die Verhältnisse sind im
einzelnen schematisch in Figur 6 dargestellt.

In Figur 6a sind der Fahrhebel 6 und das Leistungsverstellglied 78 in ihrer Neutralstellung gezeigt;
der Gleitkörper 72 ist ganz ausgefahren. Bei dieser
Einstellung des Gleitkörpers 72 wird bei der Verschwenkung des zweiten Schwenkarms 46 das Leistungsverstellglied 78 durch den zweiten Bowdenzug 75 über
seinen gesamten Verstellbereich mitgenommen, und es
ist keine Übersetzung zwischen dem Fahrhebel 6 und der
Förderpumpe 79 wirksam, wie durch die gestrichelten
Linien angedeutet ist. Figur 6b zeigt den Gleitkörper 72
in teilweise zurückgezogener Einstellung, ebenfalls
in Neutralstellung des Fahrhebels 6 und des Leistungsverstellgliedes 78. Bei Verschwenkung des Fahrhebels 6
mittels des zweiten Schwenkarms 46 wird die Übersetzungseinrichtung 70 wirksam (vgl. Figur 6c), indem
bei unverändertem Schwenkbereich des Fahrhebels 6 der
Verstellbereich des Leistungsverstellgliedes 78 verringert wird. Mit zunehmendem Einzug des Gleitkörpers 72 in die Hülse 71 verringert sich der Verstellbereich des Leistungsverstellgliedes 78 entsprechend, so daß die Einstellung der Fahrgeschwindigkeit mittels des Fahrhebels 6 entsprechend zunehmend feinfühliger wird. Dadurch wird eine genauere und ruckfreie Steuerung des Vortriebs der Tandemwalze bei Rand- oder Nahtarbeiten erreicht.

Zur Sicherung des Fahrhebels 6 gegen Verschmutzung kann dieser in eine Manschette eingeschlossen sein, die am Boden des Fahrerplatzes befestigt ist.

Die Anordnung der Fahrersitze 3,3' an dem Fahrerplatz und die seitliche Verschwenkung der vorstehend beschriebenen Lenkeinrichtungen 5 und des vorstehend beschriebenen Fahrhebels 6 ermöglichen, daß diese Bedienungselemente für die Tandemwalze stets im näheren Greifraum des Maschinenführers angeordnet werden können und die Tandemwalze stets unter genauer Kontrolle insbesondere bei Rand- oder Nahtarbeiten in ergonomisch gleich günstigen Arbeitsstellungen für den Maschinenführer betrieben werden kann.

Patentansprüche

1. Fahrerplatz für eine Tandemwalze mit zwei Fahrersitzen (3, 3'), mit zwei Lenkeinrichtungen (5) und mindestens einem Fahrhebel (6),

   dadurch gekennzeichnet, daß die Fahrersitze (3, 3') um ihre vertikale Achse drehbar im wesentlichen auf der Quermittellinie des Fahrerplatzes und in der Ebene des jeweiligen Bandagenrandes nebeneinander angeordnet sind, daß die Lenkeinrichtungen (5) im wesentlichen auf der Längsmittellinie des Fahrerplatzes und um diese schwenkbar an gegenüberliegenden Querseiten des Fahrerplatzes angeordnet sind und daß ein mittig zwischen den Fahrersitzen (3, 3') angeordneter Fahrhebel (6) vorgesehen ist.

2. Fahrerplatz nach Anspruch 1 mit einer geschlossenen Kabine, dadurch gekennzeichnet, daß die Drehachse des Fahrersitzes (3, 3') den Mittelpunkt der Längsmittellinie des Fahrersitzes (3, 3') durchsetzt.

3. Fahrerplatz nach Anspruch 1 oder 2 mit einer Lenkeinrichtung (5) aus einem Lenkrad (10) und einer Lenksäule (11), durch die hindurch das Lenkrad (10) mit einer Lenkwelle (14) und einer hydraulischen Lenkhilfe in Antriebsverbindung steht, dadurch gekennzeichnet, daß die Lenksäule (11) an dem dem Lenkrad (10) abgewandten Ende mit einer um die Lenkwelle (14) schwenkbaren Schwenkhülse (18) versehen und die Schwenkhülse (18) gegen eine Selbsthemmung (21) verschwenkbar und in der Mittellage und mindestens zwei Seitenlagen arretierbar ist.

4. Fahrerplatz nach Anspruch 3, dadurch gekennzeichnet, daß die Schwenkhülse (18) am Umfang einer die Lenkwelle (14) umgebenden Buchse (16) gegen Axialverschiebung gesichert schwenkbeweglich ist, und daß die Selbsthemmung (21) einen an der der Lenksäule (11) abgewandten Stirnseite der Schwenkhülse (18) befestigten Bolzen (20) und einen federbelasteten Seilzug (22) aufweist, dessen freies Ende an dem freien Ende des Bolzens (20) befestigt ist.

5. Fahrerplatz nach Anspruch 3 oder 4, dadurch gekennzeichnet, daß die Schwenkhülse (18) sich nur über einen Teil der Länge der Buchse (16) erstreckt und die Buchse (16) an der der Lenksäule (11) abgewandten Stirnseite eine Halteplatte (27) trägt und daß ein die Lenksäule (11) und die Schwenkhülse (18) durchsetzender Arretierbolzen (32) vorgesehen und die Halteplatte (27) an der der Schwenkhülse (18) zugekehrten Seite mit Nuten (31) zum Eingriff des Arretierbolzens (32) entsprechend der jeweils gewünschten Lage der Lenksäule (11) versehen ist.

6. Fahrerplatz nach Anspruch 5, dadurch gekennzeichnet, daß die Halteplatte (27) zu der Lenkwelle (14) zentriert angeordnet ist und einen über die Buchse (16) hinausragenden halbkreisförmigen, ringförmigen und zu der Schwenkhülse (18) ausgerichteten Vorsprung(30) mit radial verlaufenden Nuten (31) an der der Schwenkhülse (18) zugekehrten Seite aufweist und daß zu beiden Seiten des Vorsprungs (30) Begrenzungsanschläge für die Verschwenkung der Schwenkhülse (18) ausgebildet sind.

7. Fahrerplatz nach einem der Ansprüche 1 bis 6 mit einem um eine zu einer Querachse der Tandemwalze schwenkbaren Fahrhebel (6), dessen inneres Ende mit einem Leistungsverstellglied für eine Förderpumpe eines hydrostatischen Fahrantriebs verbunden ist, dadurch gekennzeichnet, daß der Fahrhebel (6) an einer um zwei zueinander senkrechte Richtungen schwenkbaren Schwenkvorrichtung (42) angeordnet ist.

8. Fahrerplatz nach Anspruch 7, dadurch gekennzeichnet, daß die Schwenkvorrichtung (42) einen um eine zur Längsachse der Tandemwalze parallele Achse schwenkbaren ersten Schwenkarm (43) und einen zweiten Schwenkarm (46) aufweist, an dem der erste Schwenkarm (43) um die genannte Achse schwenkbeweglich angeordnet ist und der um eine zu einer Querachse der Tandemwalze parallele Achse schwenkbar und mit dem Leistungsverstellglied (78) verbunden ist.

9. Fahrerplatz nach Anspruch 8, dadurch gekennzeichnet, daß der erste Schwenkarm (43) von zwei im Abstand gegenüberliegenden Platten (44, 45) gebildet ist, die an einem Ende fest mit einem Oberteil (40) des Fahrhebels (6) verbunden sind, daß die Platten (44, 45) an dem dem Oberteil (40) abgewandten Ende ein erstes Ende des zweiten Schwenkarms (46) einschliessen und durch einen Schwenkbolzen (47) verbunden sind, der ein in das erste Ende des zweiten Schwenkarms (46) eingesetztes Gleitlager (48) durchsetzt, und daß eine an ein vorstehendes Teil (51) der einen Platte (44) angreifende Selbsthemmung (50) vorgesehen ist.

10. Fahrerplatz nach Anspruch 8 oder 9, dadurch gekennzeichnet, daß der zweite Schwenkarm (46) an einem zweiten Ende in einem selbsthemmenden Schwenklager (56) gelagert ist.

11. Fahrerplatz nach Anspruch 10, dadurch gekennzeichnet, daß das Schwenklager (56) zwei gegenüberliegende, um 90° gegen den ersten Schwenkarm (43) versetzte Laschen (61, 62) mit darin eingesetzten Gleitlagern (63, 64) an dem zweiten Ende des zweiten Schwenkarms (46), die Laschen (61, 62) und Gleitlager (63, 64) durchsetzende Schwenkbolzen (59, 60) und von dem Fahrerplatz vorstehende Befestigungsplatten (57, 58) für die Schwenkbolzen (59, 60) aufweist und daß zwischen der einen Befestigungsplatte (58) und der einen Lasche (62) eine spannbare Tellerfeder (67) angeordnet ist.

12. Fahrerplatz nach einem der Ansprüche 7 bis 10, dadurch gekennzeichnet, daß der Fahrhebel (6) über eine einstellbare Übersetzungseinrichtung (70) mit dem Leistungsverstellglied (78) der Förderpumpe (79) verbunden ist.

13. Fahrerplatz nach Anspruch 12, dadurch gekennzeichnet, daß die Übersetzungseinrichtung (70) einen in einer längs des Fahrhebels (6) und der Schwenkvorrichtung (42) verlaufenden Hülse (71) gleitbeweglich geführten Gleitkörper (72) aufweist, an dessen erstem Ende ein erster Bowdenzug, mit dem ein an dem Fahrhebel (6) angebrachtes Handrad (73) verbunden ist, und an dessen zweitem, über das Schwenklager (56) hinausragenden Ende ein an dem Leistungsverstellglied (78) angreifender zweiter Bowdenzug (75) befestigt ist.

Fig. 1

2/6

0089385

Fig. 2

Fig. 3

0089385

4/6

Fig. 4

0089385

41

40

45

42

43

71

58

63

64

59

65

57

56 61

72 74

62

66

67

68

60

Fig. 5

Fig. 6

0089385

**0089385**
Nummer der Anmeldung

**EUROPÄISCHER RECHERCHENBERICHT**

Europäisches
Patentamt

EP 82 10 2247

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 868 194 (FERGUSON et al.) <br> * Spalte 2, Zeilen 3-31; Spalte 5, Zeilen 23-29, 33-36; Spalte 7, Zeilen 37-44, 63-67; Spalte 8, Zeilen 1, 25-34; Figuren 1-3 * | 1,2,7, 8 | E 01 C 19/23 <br> B 60 K 17/00 <br> B 62 D 1/02 <br> G 05 G 1/04 <br> G 05 G 5/06 <br> G 05 G 7/04 |
| A | INTERNATIONAL CONSTRUCTION, Band 8, Nr. 6, Juni 1969, IPC Business Press, Haywards Heath, G.B. <br> "Conexpo report" * Seite 41, obere Abbildung, Bildunterschrift dazu; Seite 101, Zeilen 18-22 * | 1 | |
| A | US-A-3 416 419 (KRONHOLM) <br> * Spalte 3, Zeilen 29,30,48,49,54-56,66-71,74,75; Spalte 4, Zeilen 31-33, 34-60; Figuren 1-3 * | 1,7,8 | RECHERCHIERTE SACHGEBIETE (Int. Cl. 3) |
| A | US-A-3 901 617 (HERBST) <br> * Spalte 2, Zeilen 42-47, 63-65; Spalte 3, Zeilen 12-29; Figuren 1,2 * | 1 | B 62 D <br> E 01 C <br> E 02 D |
| A | US-A-3 412 659 (HARBKE et al.) <br> * Spalte 2, Zeilen 21-26; Spalte 5, Zeilen 53-64; Spalte 6, Zeilen 4,5,10,11,18-21; Figuren 1,2A,3-5 * | 1 | |

--- -/-

Der vorliegende Recherchenbericht wurde für alle Patentansprüche erstellt.

| Recherchenort <br> DEN HAAG | Abschlußdatum der Recherche <br> 29-11-1982 | Prüfer <br> SCHUMAN R. |
|---|---|---|

## Europäisches Patentamt — EUROPÄISCHER RECHERCHENBERICHT

EP 82 10 2247

| | | | Seite 2 |
|---|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 954 088 (WILLIAMSON et al.) <br> * Spalte 1, Zeilen 27-32, 48-61; Spalte 2, Zeilen 15-19, 63-72; Spalte 3, Zeilen 55-61; Spalte 4, Zeilen 6,7; Figuren 1-3 * <br><br> --- | 1 | |
| A | DE-A-3 015 408 (MOOG) <br><br> * Seite 3, Zeilen 1-7; Seite 4, Zeilen 15-18,20,21; Seite 5, Zeilen 4-6, 9-14, 21,22; Seite 6, Zeilen 1-8, 20-24; Seite 7, Zeile 1; Seite 8, Zeilen 12-16; Seite 9, Zeilen 3,5-12, 17-22; Seite 10, Zeilen 1,2, 6-15, 18-22; Seite 11, Zeilen 1-4, 8-16; Figuren 1-5 * <br><br> --- | 1,2,7, 8 | |
| A | US-A-2 437 524 (HARRISON et al.) <br> * Spalte 1, Zeilen 1-7, 9,10; Spalte 3, Zeilen 46-50; Figuren 1,2 * <br><br> --- | 2 | RECHERCHIERTE SACHGEBIETE (Int. Cl. ³) |
| A | FR-E- 81 060 (RICHIER) <br> * Seite 1, rechte Spalte, Zeilen 31-36; Seite 2, linke Spalte, Zeilen 1-4, 31; Figur 13 * <br><br> --- | 2 | |
| A | DE-A-1 658 527 (S.A. DES ANCIENS ETABLISSEMENTS ALBARET) <br><br> ---     -/- | | |

Der vorliegende Recherchenbericht wurde für alle Patentansprüche erstellt.

| Recherchenort | Abschlußdatum der Recherche | Prüfer |
|---|---|---|
| DEN HAAG | 29-11-1982 | SCHUMAN R. |

# EUROPÄISCHER RECHERCHENBERICHT

**0089385**
Nummer der Anmeldung

Europäisches
Patentamt

EP  82 10 2247

## EINSCHLÄGIGE DOKUMENTE

Seite 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-1 122 499  (DOMENIGNETTI) | | |
| A | US-A-3 890 056  (DOMENIGHETTI) | | |
| A | US-A-3 914 065  (DOMENIGHETTI) | | |
| A | CH-A- 422 036  (BOMAG BOPPARDER MASCHINENBAUGESELLSCHAFT) | | |

RECHERCHIERTE
SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 29-11-1982 | SCHUMAN R. |